# EUROPEAN PATENT APPLICATION

(11) **EP 2 869 583 A1**
(43) Date of publication of application: **06.05.2015**
(21) Application number: 14158213.0
(22) Date of filing: 06.03.2014
(51) Int. Cl.: H04N 21/422, H04N 21/438, H04N 21/45, H04N 5/50

(54) **Display apparatus and method for tuning the same**

(30) Priority: 31.10.2013 US 201361898354 P
(71) Applicant: Kabushiki Kaisha Toshiba, Tokyo 105-8001 (JP)
(72) Inventor: Tateno, Tsuyoshi, Tokyo (JP)
(74) Representative: Henkel, Breuer & Partner

(57) **Abstract**

According two one embodiment, a display apparatus includes a display, a receiver, and a tuner. The receiver is configured to receive position information indicative of a position where the display apparatus exists. The tuner is configured to tune a signal used for displaying an image on the display on the position information.

## Description

### FIELD

Embodiments relate to a display apparatus and a method for tuning the same.

### BACKGROUND

It is necessary to perform tuning to receive a broadcast wave signal and view contents by a television set at first. To perform tuning, specialized knowledge such as frequencies of broadcast wave signals may be required, so that the tuning is a difficult operation for general users. In particular, in Europe, tuning is difficult to be performed in some countries.

### BRIEF DESCRIPTION OF THE DRAWINGS

Fig. 1 is a block diagram showing a schematic configuration of a terminal device 1 and a display apparatus 2 according to a first embodiment.
Fig. 2 is a diagram for explaining start frequencies fs and the tuning based thereon.
Fig. 3 is a diagram showing a structure of a table showing a relationship between a country and/or an area and the start frequencies.
Fig. 4 is a flowchart showing an example of a processing operation of the terminal device 1.
Fig. 5 is a flowchart showing an example of a processing operation of the display apparatus 2.
Fig. 6 is a block diagram showing a schematic configuration of a terminal device 1a and a display apparatus 2 according to the second embodiment.
Fig. 7 is a diagram showing an example of the tuning result displayed considering the preference information.

### DETAILED DESCRIPTION

According to one embodiment, a display apparatus includes a display, a receiver, and a tuner. The receiver is configured to receive position information indicative of a position where the display apparatus exists. The tuner is configured to tune a signal used for displaying an image on the display based on the position information.

Hereinafter, embodiments will be specifically described with reference to the drawings.

### (First Embodiment)

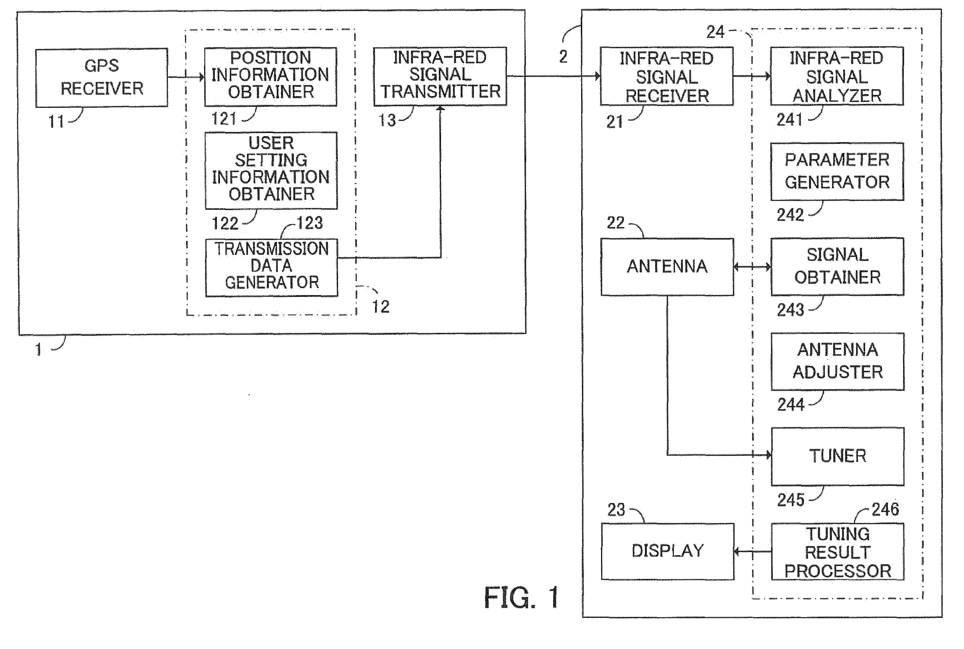

Fig. 1 is a block diagram showing a schematic configuration of a terminal device 1 and a display apparatus 2 according to a first embodiment. The display apparatus 2 receives one or more broadcast wave signals such as a terrestrial digital broadcast wave signal, a BS (Broadcasting Satellite) digital broadcast wave signal, a CS (Communication Satellite) digital broadcast wave signal, and a cable broadcast wave signal. The display apparatus 2 processes these broadcast wave signals and reproduces contents (program). However, it is necessary to perform tuning before receiving a broadcast wave signal. In the present embodiment, the terminal device 1 supports the tuning of the display apparatus 2.

The terminal device 1 is an electronic device such as a smartphone and a tablet and is used by a user. The terminal device 1 includes a GPS (Global Positioning System) receiver 11, a controller 12, and an infra-red signal transmitter 13.

The GPS receiver 11 performs positioning of the current position of the terminal device 1. The current position is represented by, for example, latitude and longitude. In the present embodiment, it is assumed that the terminal device 1 and the display apparatus 2 are proximate to each other (at least, these are located in the same country and the same area). Therefore, the present position of the terminal device 1 substantially is coincident with that of the display apparatus 2.

The controller 12 includes a position information obtainer 121, a user setting information obtainer 122, and a transmission data generator 123. These components are functions implemented by executing a predetermined program by a processor (not shown in the drawings) in the terminal device 1, for example. The functions of the controller 12 are also called an application (app). The application may be installed in the terminal device 1 in advance or may be downloaded from outside through a network.

The position information obtainer 121 obtains position information that indicates the current position of the terminal device 1 from the GPS receiver 11.

The user setting information obtainer 122 obtains setting information necessary for the tuning through a user interface (not shown in the drawings) such as a touch panel. The setting information is information useful for the tuning of the display apparatus 2, such as a model name of the display apparatus 2.

The setting information may include information indicating whether the display apparatus 2 performs tuning of all broadcast wave signals which the display apparatus 2 can receive or performs tuning of part of the broadcast wave signals. In general, it takes a long time to perform tuning. Therefore, if a user can set information as described above, convenience of the user increases.

For example, it is possible to perform tuning of all broadcast wave signals that can be received by spending a long time in the middle of the night in which the display apparatus 2 is not used. Alternatively, it is possible to perform tuning of only a terrestrial digital broadcast wave signal which is the most frequently viewed immediately after installing the display apparatus 2.

The transmission data generator 123 generates data having a format suitable for transmission to the display apparatus 2. The data includes the position information and the setting information. Further, the data includes a tuning execution instruction that indicates to perform tuning.

The infra-red signal transmitter 13 transmits the data generated by the transmission data generator 123 to the display apparatus 2 as an infra-red signal.

The display apparatus 2 includes an Infra-red signal receiver 21, an antenna 22, a display 23, and a controller 24.

The infra-red signal receiver 21 is a light receiver including a photo-detector that responds to infra-red light. The infra-red signal receiver 21 receives the infra-red signal from the terminal device 1. The infra-red signal includes the position information of the current position of the terminal device 1, that is to say, the current position of the display apparatus 2, the setting information, and the tuning execution instruction.

The antenna 22 receives various broadcast wave signals. The received broadcast wave signals are used for display of the display 23. More specifically, the broadcast wave signals go through processing such as decoding and then can be displayed on the display 23 as contents. As the antenna 22, an antenna for receiving the terrestrial digital broadcast wave signals, an antenna for receiving the BS digital broadcast wave signals, and an antenna for receiving the CS digital broadcast wave signals may be provided separately.

The aforementioned contents are displayed on the display 23. As described later, as a result of the tuning, a list that shows contents that can be displayed on the display 23 may be displayed on the display 23.

The controller 24 includes an infra-red signal analyzer 241, a parameter generator 242, a signal obtainer 243, an antenna adjuster 244, a tuner 245, and a tuning result processor 246. These components are functions implemented by executing a predetermined program by a processor (not shown in the drawings) in the display apparatus 2, for example.

The infra-red signal analyzer 241 analyzes the infra-red signal received by the infra-red signal receiver 21. In the present embodiment, the position information, the setting information, and the tuning execution instruction are obtained by the analysis.

The parameter generator 242 generates a parameter necessary for the tuning on the basis of the position information. For example, the parameter generator 242 identifies a country and/or an area in which the display apparatus 2 is located on the basis of the latitude and longitude indicated by the position information. The parameter generator 242 sets a start frequency fs as a parameter according to frequencies of broadcast wave signals present in the identified country and/or area. The tuning is performed according to the start frequency fs, and this will be described later in detail.

The parameter generator 242 may generate a parameter indicating a name of satellite, a parameter of a broadcast signal identified from the position information, and the like. However, widths of parameters other than the parameter of the start frequency fs are not so large, so that signals that can be obtained may be searched for while performing tuning.

The signal obtainer 243 obtains a broadcast wave signal received by the antenna 22.

The antenna adjuster 244 adjusts the antenna 22 as needed before the tuning so that the antenna 22 can receive a broadcast wave signal of a predetermined strength. As an example, it is possible to display strength of the broadcast wave signal obtained by the signal obtainer 243 and an optimal orientation of the antenna 22 on the display 23 (or a display, not shown in the drawings, provided on the terminal device 1) and prompt the user to adjust the orientation of the antenna 22.

The tuner 245 performs tuning. More specifically, the tuner 245 performs a scan of broadcast wave signals from the start frequency fs set by the parameter generator 242. In this sense, the start frequency fs is also called a scan start frequency. The start frequency fs is set on the basis of the position information, so that as a result, the tuner 245 performs tuning on the basis of the position information.

The tuning result processor 246 causes the display 23 to display a tuning result. For example, the tuning result processor 246 causes the display 23 to display information indicating channel names and contents names that can be displayed on the display 23 as a result of the tuning, for example in a list format. In this case, it is desirable that the tuning result processor 246 display the information in a language according to the country and/or area identified by the parameter generator 242.

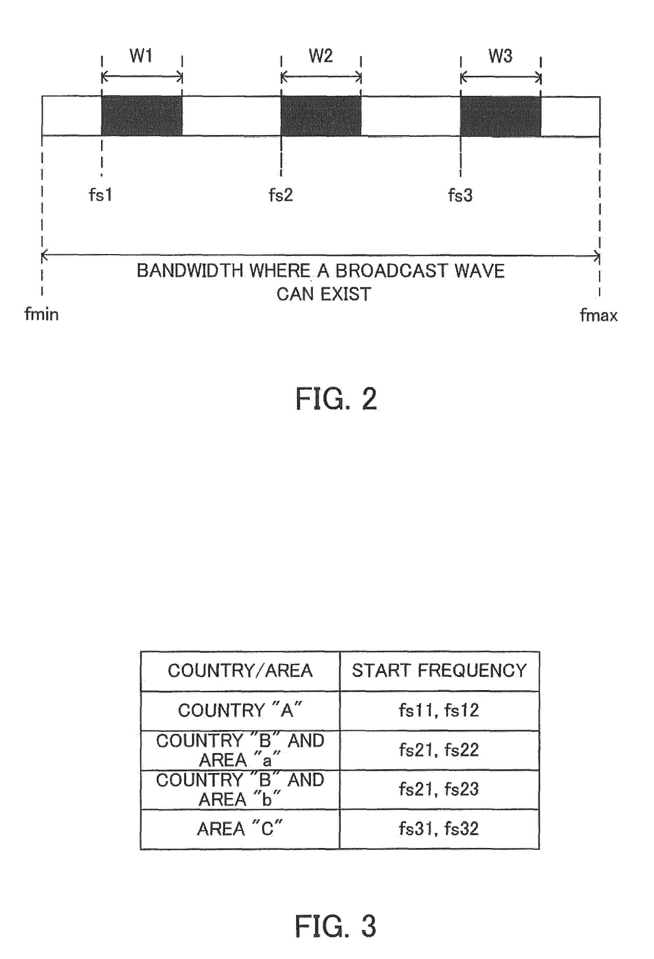

Next, the start frequency fs and the tuning based on the start frequency fs will be described in detail with reference to Fig. 2. As shown in Fig. 2, a broadcast wave signal can exist in a predetermined bandwidth from a minimum frequency fmin to a maximum frequency fmax. However, in practice, the broadcast wave signals do not necessarily exist in the entire bandwidth. The broadcast wave signals exist in only part of bandwidths (in the example of Fig. 2, bandwidths W1, W2, and W3) according to country and/or area.

Therefore, it is not efficient to perform a scan of the broadcast wave signal from the minimum frequency fmin to the maximum frequency fmax. Thus, in the present embodiment, the parameter generator 242 sets the start frequency fs that is determined according to a country and/or area. The start frequency fs is a minimum frequency in a bandwidth in which the broadcast wave signals actually exist. In the example of Fig. 2, three start frequencies fs1, fs2, and fs3 are set corresponding to bandwidths W1, W2, and W3, respectively, in which the broadcast wave signals are actually exist.

The tuner 245 starts a scan of the broadcast wave signals from the start frequencies fs1, fs2, and fs3. For example, the tuner 245 starts the scan from the start frequency fs1. Then, the tuner 245 gradually raises the frequency to be scanned and performs the scan until no broadcast wave signal exists. Thereby, the broadcast wave signals in the bandwidth W1 can be received. Next, the tuner 245 starts the scan from the start frequency fs2 instead of the frequency (fs1 + W1).

By such a manner, it is possible to omit the scan in useless bandwidths (for example, from fmin to fs1, and the like), thereby shortening the time required for the tuning.

Relationship between a country and/or area and the start frequency fs of the country and/or area may be held, for example, as a table as shown in Fig. 3 in the display apparatus 2. The parameter generator 242 can set the start frequency fs from the country and/or area based on the position information by referring to the table.

As shown in Fig. 3, in the table, start frequencies fs are associated with each country, each country and area, or each area. In the example of Fig. 3, in a country "A", the start frequencies are fs11 and fs12 in any area in the country "A". On the other hand, in a country "B", while the start frequencies are fs21 and fs22 in an area "a" in the country "B", the start frequencies are fs21 and fs23 in an area "b". In an area "C" which includes a plurality of countries, the start frequencies are fs31 and fs32.

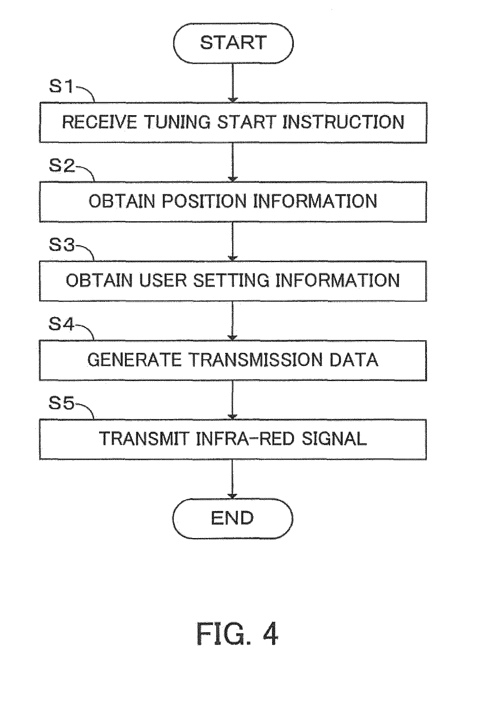

Fig. 4 is a flowchart showing an example of a processing operation of the terminal device 1. When a tuning start instruction is received from a user (step S1), the position information obtainer 121 obtains the position information of the terminal device 1 from the GPS receiver 11 (step S2). The user setting information obtainer 122 obtains the setting information from the user (step S3). The transmission data generator 123 generates transmission data by converting the position information and the setting information into data of a format suitable for transmission (step S4). The transmission data is transmitted as an infra-red signal by the infra-red signal transmitter 13 to the display apparatus 2 (step S5).

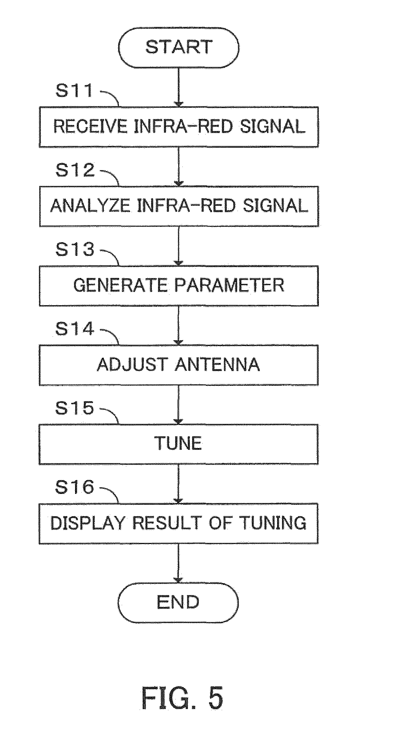

Fig. 5 is a flowchart showing an example of a processing operation of the display apparatus 2. The infra-red signal receiver 21 receives the infra-red signal from the terminal device 1 (step S11). The infra-red signal analyzer 241 analyzes the infra-red signal (step S12). Thereby, the position information and the setting information are obtained.

The position information may be converted into the setting information in the terminal device 1 and the setting information including the position information may be transmitted from the terminal device 1 to the display apparatus 2.

Subsequently, the parameter generator 242 generates a parameter necessary for the tuning on the basis of the position information (step S13). More specifically, the parameter generator 242 identifies a country and/or an area in which the display apparatus 2 is located on the basis of the latitude and longitude in the position information. Then, the parameter generator 242 sets the start frequencies fs (for example, start frequencies fs1 to fs3 in Fig. 2) of the broadcast wave signals present in the identified country and/or area.

If the generated parameter is inappropriate (for example, when the parameter generation is failed for some cause, and when the area is out of a normal broadcast wave signal receivable area), the tuning may be performed without using the generated parameter.

Subsequently, the antenna adjuster 244 adjusts the antenna 22 so that the antenna 22 can receive a broadcast wave signal of a predetermined strength (step S14).

The tuner 245 performs tuning by referring to the setting information such as a model name of the display apparatus 2 as needed on the basis of the parameter generated on the basis of the position information (step S15). More specifically, the tuner 245 starts the scan of the broadcast wave signals from the start frequency fs which is set as a parameter.

When a broadcast wave signal to be scanned is specified as the setting information, the tuner 245 performs a scan of the specified broadcast wave signal. In other words, the broadcast wave signals other than the specified broadcast wave signal are not scanned. Further, when a card for pay broadcast is inserted in the display apparatus 2, the tuner 245 may performs a scan of the broadcast wave signal of the pay broadcast.

Thereby, the display apparatus 2 can receive the broadcast wave signal and display contents on the display 23 by processing the broadcast wave signal. The tuning result processor 246 displays a tuning result (step S16).

In this way, in the first embodiment, the position information indicating the position of the display apparatus 2 is transmitted from the terminal device 1 to the display apparatus 2. The display apparatus 2 identifies the start frequency fs from the position information and performs tuning. Therefore, even a general user who does not know the start frequency fs can easily and quickly perform tuning of the display apparatus 2 without specifying a country and/or an area and without specifying the start frequency.

### (Second Embodiment)

In a second embodiment described below, the tuning is performed considering not only the position information of the display apparatus 2, but also user's preference. Hereinafter, points different from the first embodiment will be mainly described.

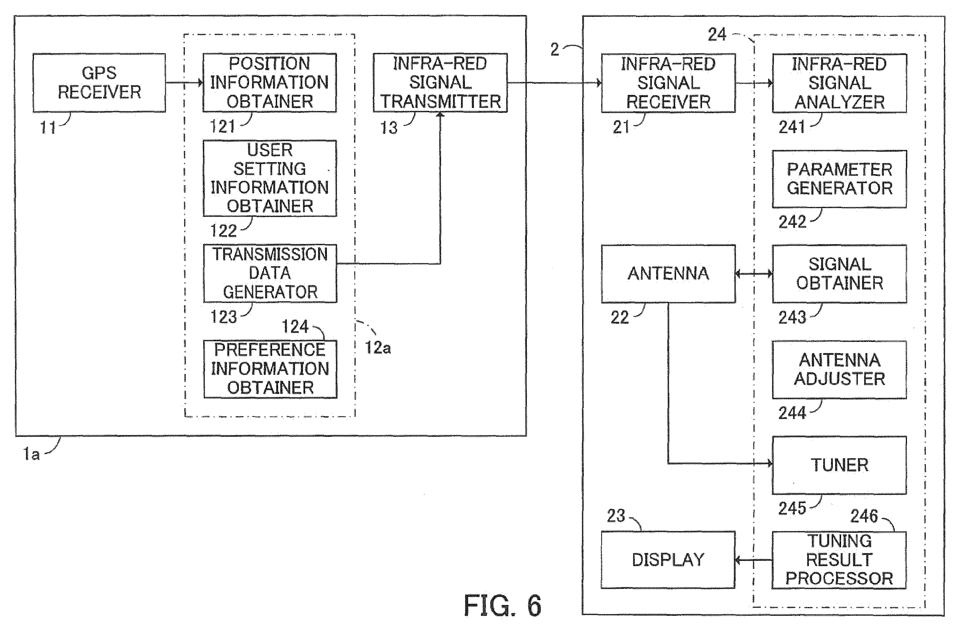

Fig. 6 is a block diagram showing a schematic configuration of a terminal device 1a and a display apparatus 2 according to the second embodiment. A controller 12a of the terminal device 1a further includes a preference information obtainer 124. The preference information obtainer 124 obtains preference information indicating preference of a user who uses the terminal device 1a, in particular, preference related to contents.

As an example, the preference information may be information that indicates which category the user prefers among various categories such as sports, music, and drama. Further, the preference information may be information that indicates which broadcast wave signal the user prefers for contents among various broadcast wave signals such as the terrestrial digital broadcast wave signal, the BS digital broadcast wave signal, the CS digital broadcast wave signal, and the cable broadcast wave signal.

The preference information obtainer 124 may receive preference information which is manually inputted by the user or may automatically obtain preference information. When automatically obtaining preference information, as an example, the preference information obtainer 124 may obtain preference information on the basis of an operation history of the terminal device 1a. For example, the preference information obtainer 124 may obtain user's preference information from a browsing history of web pages and moving images and a search history of a search engine according to the function of the terminal device 1a.

The obtained preference information is processed by the transmission data generator 123 along with the position information and the setting information and then transmitted from the infra-red signal transmitter 13 to the display apparatus 2 along with the position information and the setting information.

Although the configuration of the display apparatus 2 is substantially the same as that of the first embodiment, there is a difference that the processing operation considering the preference information is performed. The processing operation of the display apparatus 2 in the present embodiment will be described with reference to Fig. 5.

When performing tuning in step S15, the tuner 245 may perform tuning considering the preference information.

For example, if the preference information indicates that the user prefers contents of the CS digital broadcast wave signal, the tuner 245 may first perform tuning of the CS digital broadcast wave signal. The tuner 245 may perform tuning of other broadcast wave signals in some other time such as in the middle of the night.

As another example, if the preference information indicates that the user prefers sports programs, the tuner 245 may preferentially scan a bandwidth in which contents related to sports are mainly broadcast. The tuner 245 may perform tuning in other bandwidths in some other time such as in the middle of the night.

In step S16, the tuning result processor 246 may display a tuning result on the display 23 considering the preference information.

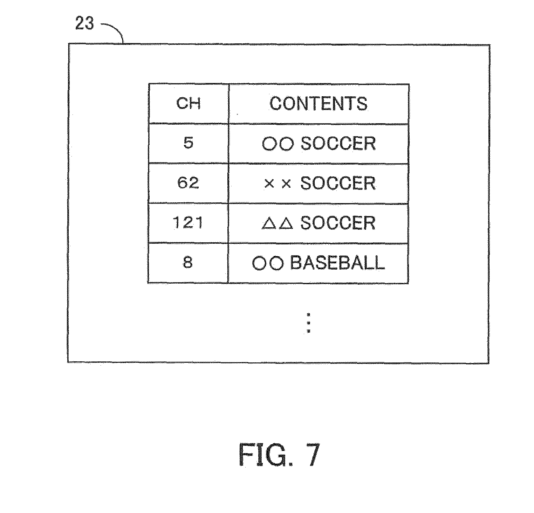

Fig. 7 is a diagram showing an example of the tuning result displayed considering the preference information. In this example, it is assumed that the preference information indicates that the user prefers sports, in particular, soccer. In this case, the tuning result processor 246 may cause the display 23 to preferentially display channels that broadcast contents related to soccer (in a higher position) and subsequently display channels that broadcast contents related to other sports. The tuning result is displayed in order of priority according to the preference information, so that even when there are a large number of channels, the user can quickly recognize information of contents that the user prefers very much.

In this way, in the second embodiment, the tuning is performed considering the user's preference information. Therefore, convenience of the user increases.

In the aforementioned embodiments, examples are described in which the terminal devices 1 and 1a transmit data to the display apparatus 2 by the infra-red signal. However, data may be transmitted and received through a network or near-field wireless communication. Alternatively, the terminal devices 1 and 1a may be connected (for example, USB-connected) to a remote control unit of the display apparatus 2 and data may be transmitted by infrared to the display apparatus 2 through the remote control unit. Further alternatively the terminal device 1 may be connected (for example, USB-connected) to the display apparatus 2 and data may be directly transmitted to the display apparatus 2.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A display apparatus comprising:
a display:
a receiver configured to receive position information indicative of a position where the display apparatus exists; and
a tuner configured to tune a signal used for displaying an image on the display based on the position information.

2. The apparatus of claim 1, wherein the receiver is configured to receive the position information from a terminal device comprising a GPS receiver.

3. The apparatus of claim 1, wherein the tuner is configured to scan the signal within a frequency band depending on the position information.

4. The apparatus of claim 3, wherein the tuner is configured to scan the signal from a scan start frequency depending on the position information.

5. The apparatus of claim 4, further comprising a parameter generator configured to specify a country and/or an area where the display apparatus exists, and to set the scan start frequency depending on the country and/or the area.

6. The apparatus of claim 1, further comprising a tuning result processor configured to display a result of the tuning on the display.

7. The apparatus of claim 6, further comprising a parameter generator configured to specify a country and/or an area where the display apparatus exists,
wherein the tuning result processor is configured to display the result of the tuning with a language depending on the country and/or area.

8. The apparatus of claim 6, wherein
the receiver is configured to receive preference information, and
the tuning result processor is configured to display the result of the tuning on the display in a priority order depending on the preference information.

9. The apparatus of claim 1, wherein
the receiver is configured to receive preference information, and
the tuner is configured to tune the signal taking the position information and the preference information into consideration.

10. A method for tuning a display apparatus comprising a display, the method comprising:
receiving position information indicative of a position where the display apparatus exists; and
tuning a signal used for displaying an image on the display based on the position information.

11. The method of claim 10, wherein upon receiving the position information, the position information is received from a terminal device comprising a GPS receiver.

12. The method of claim 10, wherein upon tuning the signal, the signal is scanned within a frequency band depending on the position information.

13. The method of claim 12, wherein upon tuning the signal, the signal is scanned from a scan start frequency depending on the position information.

14. The method of claim 13, further comprising:
specifying a country and/or an area where the display apparatus exists; and
setting the scan start frequency depending on the country and/or the area.

15. The method of claim 10, further comprising displaying a result of the tuning on the display.

16. The method of claim 15, further comprising specifying a country and/or an area where the display apparatus exists,
wherein upon displaying the result of the tuning, the result of the tuning is displayed with a language depending on the country and/or area.

17. The method of claim 15, further comprising receiving preference information,
wherein upon displaying the result of the tuning, the result of the tuning is displayed on the display in a priority order depending on the preference information.

18. The method of claim 10, further comprising receiving preference information,
wherein upon tuning the signal, the signal is tuned taking the position information and the preference information into consideration.
